# EUROPEAN PATENT APPLICATION

(11) **EP 3 701 789 A1**
(43) Date of publication of application: **02.09.2020**
(21) Application number: 19160424.8
(22) Date of filing: 01.03.2019
(51) Int. Cl.: A01G 13/02, A01G 17/14

(54) **RETAINING PEG PROVIDING MULTIPLE ANCHOR POINTS FOR SECURING A PLANT SHELTER AND KIT INCLUDING THE SAME**

(71) Applicant: Berry Global, Inc., Evansville, Indiana 47710 (US)
(72) Inventor: McCARTHY, Andrew Mark, Newport NP10 8HW (GB); de WOLFF, Michel, 5433 Katwijk (NL); WORMALD, Paul Stuart, Maldon, Essex CM9 6AZ (GB)
(74) Representative: HGF

(57) **Abstract**

Retaining pegs providing multiple anchor points for securing a plant shelter around a plant or a portion of a plant are provided. The retaining pegs include a body portion configured to directly or indirectly secure a plant shelter to a section of soil positioned underneath the shelter and a wire-attachment portion configured to engage a wire located proximate to the plant shelter. The wire-attachment portion includes a first end proximate to the body portion and a second end distal to the body portion, in which the wire-attachment portion includes a plurality of bent portions to define at least one hook portion spaced-apart from the body portion.

## Description

### TECHNICAL FIELD

The presently-disclosed invention relates generally to a retaining peg configured to provide multiple anchoring points for securing a plant shelter, which may be configured to receive a retaining peg, about a plant (e.g., a vine) or portion of a plant. The presently-disclosed invention also relates to a kit including at least one retaining peg and at least one plant shelter.

### BACKGROUND

Plant shelters are known in the art and typically comprise a basic plastic structure configured to surround the plant to allow the plant to grow without being disturbed by harsh environmental elements or become disturbed by animals. The plastic used may be translucent to allow some light to reach the growing plant through the walls of the basic plastic structure. Other configurations of the structure merely allow light to pass through one or more openings in the structure.

The opaque nature of conventional plastic structures typically does not allow a sufficient amount of light to reach the plant through the walls of the structure. While one or more additional openings may be configured into the structure, these openings may allow either the growth or survival of the plant to be comprised resulting from contact with environmental elements or animals. Smaller apertures may be provided, however, the plant may still suffer wind damage. Additionally, the apertures or other openings provided in the structure may compromise the overall strength of the structure as well. Apertures and/or openings also provide growth avenues for the plant, and when it is time for the shelter to be removed, damage may occur to those portions of the plant that extend though such apertures or openings.

In the case of shelters used to surround vines, such as in a vineyard, a shelter is placed around the growing vine at the base of the vine by pushing the shelter into the ground/soil around the base of the vine. For added support, the shelter may be attached to a trellis wire via a separate twist or tie that is wrapped around the trellis wire and a portion of the shelter, such as through a hole formed in the side of the shelter.

There remains a need in the art for a retaining peg configured for providing a plant shelter, which may be configured for receiving such a retaining peg, multiple anchoring points without the need for the use of separate ties. In this regard, there also remains a need for a kit including such a retaining peg and a shelter configured to receive the retaining peg.

### SUMMARY OF INVENTION

One or more embodiments of the invention may address one or more of the aforementioned problems. Certain embodiments, according to the invention, provide retaining pegs configured to provide multiple anchor points for securing a plant shelter around a portion of a plant. In accordance with certain embodiments of the invention, the retaining pegs may include a body portion configured to directly or indirectly secure a plant shelter to a section of soil positioned underneath and/or proximate to the plant shelter and a wire-attachment portion configured to engage a wire located above or proximate to the plant shelter, such as a vine wire used in viticulture. The wire-attachment portion, in accordance with certain embodiments of the invention, may include a first end proximate to the body portion and a second end distal to the body portion, in which the wire-attachment portion includes a plurality of bent portions to define at least one hook portion spaced-apart from the body portion. In accordance with certain embodiments of the invention, the body portion lies in an imaginary Z-X plane (e.g., generally two-dimensional) and the at least one hook portion, at least partially, lies in a different imaginary plane intersecting and passing through the imaginary Z-X plane. In this regard, the hook portion may be utilized to engage a nearby wire to provide an additional anchoring point for the plant shelter. The multiple anchoring points, for example, may provide a more secure placement of the plant shelter. In accordance with certain embodiments of the invention, the use of additional wire ties (to attach the peg and/or shelter) to a proximate and/or overhead wire is not necessary.

In another aspect, the present invention provides a kit including a retaining peg or pegs as disclosed herein and a shelter (e.g., plant shelter) configured to receive and allow the retaining peg to pass through at least a portion of the shelter to directly or indirectly secure the shelter to a section of soil positioned underneath or proximate to the shelter. In accordance with certain embodiments of the invention, the shelter (e.g., plant shelter) may comprise at least one through channel extending through a shelter-length of the shelter from a first-shelter-end to a second-shelter-end or at least a portion of the shelter-length. The at least one through channel may be configured to receive and allow the retaining peg to pass through the at least one through channel. In accordance with certain embodiments of the invention, the shelter (e.g., plant shelter) may additionally or alternatively comprise a collapsible shelter. In this regard, the collapsible shelter may be configured to transition between a collapsed configuration (e.g., generally flat) and an uncollapsed configuration (e.g., expanded into a three-dimensional tubular structure defining a conduit therethrough) upon application of pressure by a user.

In yet another aspect, the present invention provides a method of protecting a plant. In accordance with certain embodiments of the invention, for example, the method may comprise a step of surrounding the plant or a portion of the plant with a shelter (e.g., plant shelter), in which the shelter is configured to receive and allow a retaining peg, such as those disclosed herein, to pass through at least a portion of the shelter to directly or indirectly secure the shelter to a section of soil positioned underneath or proximate to the shelter. In accordance with certain embodiments of the invention, the shelter may comprise at least one through channel extending through a shelter-length of the shelter from a first-shelter-end to a second-shelter-end or at least a portion of the shelter-length. The method may further comprise a step of inserting a retaining peg, such as those disclosed herein, through at least one through channel of the shelter. In accordance with certain embodiments of the invention, the method may further comprise engaging an overhead (or proximately located) wire with a wire-attachment portion, such as those disclosed herein, of the retaining peg. The wire-attachment portion, for example, may include a hook portion that is positioned over the overhead (or proximately located) wire and directly engages the wire to provide an additional anchor point (e.g., anchored to the wire via the wire-attachment portion of the retaining peg).

Still other objects and features will become apparent from the following detailed description considered in conjunction with the accompanying drawings.

### BRIEF DESCRIPTION OF THE DRAWING(S)

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout, and wherein:
Figure 1 illustrates a retaining peg having a body portion extending through a plant shelter according to an embodiment of the invention;
Figure 2 illustrates a front view of a retaining peg according to an embodiment of the invention;
Figure 3 illustrates a top view of a retaining peg according to an embodiment of the invention;
Figure 4 illustrates an exploded front view of a wire-attachment portion of a retaining peg according to an embodiment of the invention;
Figure 5 illustrates an exploded side view of a wire-attachment portion of a retaining peg according to an embodiment of the invention;
Figure 6A illustrates an isometric view of shelter configured to receive a retaining peg according to an embodiment of the invention;
Figure 6B illustrates a top view of the shelter for figure 6A;
Figure 7A illustrates an isometric view of a collapsible shelter in a collapsed configuration according to one embodiment of the invention;
Figure 7B illustrates an isometric view of a collapsible shelter in an uncollapsed or expanded configuration according to one embodiment of the invention;
Figure 8A illustrates an isometric view of a collapsible shelter in a collapsed configuration according to one embodiment of the invention; and
Figure 8B illustrates an isometric view of a collapsible shelter in an uncollapsed or expanded configuration according to one embodiment of the invention.

### DETAILED DESCRIPTION

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

It is to be understood, however, that the drawings are designed solely for purposes of illustration and not as a definition of the limits of the invention, for which reference should be made to the appended claims. Any relative dimensions illustrated in the figures are given by way of example and are not intended to be limiting. As would be appreciated by a person having ordinary skill in the art, the relative dimensions can vary depending on any number of factors including, without limitation, the intended use and performance of the illustrated article.

The invention includes, according to certain embodiments, a retaining peg that may be used in conjunction with a shelter for protecting and/or enhancing the growth of plants, in particular, young trees, shrubs, and/or vines. Certain embodiments of the invention are directed to retaining pegs configured to provide multiple anchor points for securing a plant shelter that is positioned around a portion of a plant (e.g., a vine). In accordance with certain embodiments of the invention, the retaining pegs may include a body portion configured to directly or indirectly secure a plant shelter to a section of soil positioned underneath and/or proximate to the plant shelter and a wire-attachment portion configured to engage a wire located above or proximate to the plant shelter, such as a vine wire (e.g., trellis wire) used in viticulture applications. The wire-attachment portion, in accordance with certain embodiments of the invention, may include a first end proximate to the body portion and a second end distal to the body portion, in which the wire-attachment portion includes a plurality of bent portions to define at least one hook portion spaced-apart from the body portion. In this regard, for example, the hook portion of the wire-attachment portion may be used to directly engage a wire to provide a second anchoring point for the shelter. For example, the body portion of the retaining peg may pass through at least a portion of the shelter (e.g., via a through channel of the shelter positioned internally to the shelter wall(s), positioned between two walls of the shelter, or positioned external to the shelter wall(s)) and engage (e.g., penetrate) the ground/soil positioned underneath or proximate to the shelter. In accordance with certain embodiments of the invention, for example, the tip of the body portion of the retaining peg may comprise a pointed and/or sharpened structure to facilitate penetration of the retaining peg into the ground/soil positioned underneath or proximate to the shelter to provide at least a first anchoring point for the shelter. As noted above, the wire attachment portion may be hooked onto a wire (e.g., trellis wire) overhead and/or proximate to the shelter to provide at least a second anchoring point for the shelter. In accordance with certain embodiments of the invention, the multiple anchoring points for the shelter may be achieved without the need of separate twists and/or ties to provide an easier and more secure anchoring of the shelter around the plant to be protected. In accordance with certain embodiments of the invention, the shelter may comprise a collapsible shelter, for example, as described herein.

### I. Definitions

The terms "substantial" or "substantially" may encompass the whole amount as specified, according to certain embodiments of the invention, or largely but not the whole amount specified according to other embodiments of the invention.

The terms "polymer" or "polymeric", as used interchangeably herein, may comprise homopolymers, copolymers, such as, for example, block, graft, random, and alternating copolymers, terpolymers, etc., and blends and modifications thereof. Furthermore, unless otherwise specifically limited, the term "polymer" or "polymeric" shall include all possible structural isomers; stereoisomers including, without limitation, geometric isomers, optical isomers or enantionmers; and/or any chiral molecular configuration of such polymer or polymeric material. These configurations include, but are not limited to, isotactic, syndiotactic, and atactic configurations of such polymer or polymeric material.

The term "biocomposite", as used herein, may comprise two or more distinct substances having natural and biological origin that are combined to produce a new material with properties not present in either individual material. According to certain embodiments of the invention, biocomposite materials may comprise biopolymers and/or biofibers.

The term "biodegradable", as used herein, may comprise all biocomposite and biopolymeric materials including those composed at least in part of sustainable sources and whose cycle is CO₂ neutral, completely slag-free, and are biodegradable at the end of their useful lifetime (e.g., via natural biodecomposition or combustion).

### II. Retaining Pegs and Kits Including Shelter(s) and Retaining Pegs(s)

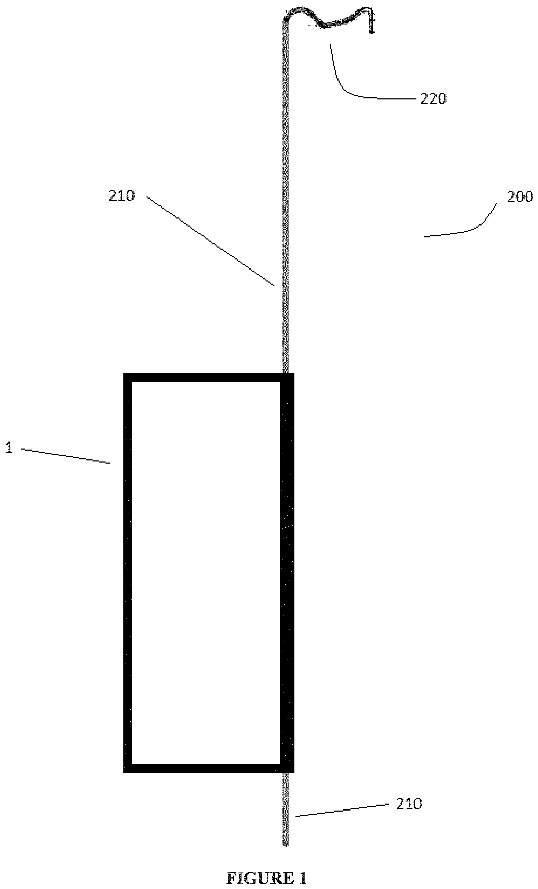

In accordance with certain embodiments of the invention, the presently-disclosed invention provides retaining pegs that enable and/or provide multiple anchoring points for a shelter (e.g., plant shelter) to provide enhanced stability to the shelter. As illustrated in Figure 1, for example, retaining pegs 200 in accordance with certain embodiments of the invention comprise a body portion 210 and a wire-attachment portion 220. As shown in Figure 1, the retaining pegs may be used in conjunction with a shelter 1 that may be configured to receive and allow the body portion 210 of the retaining peg 200 to pass through at least a portion of the shelter 1 to directly or indirectly secure the shelter to a section of soil positioned underneath or proximate to the shelter. For example, the shelter may comprise at least one through channel configured to allow the body portion of the retaining peg to pass therethrouh and provide a means for securing the shelter to the soil underneath or proximate the shelter. As illustrated in Figure 1, for example, the body portion 210 of the retaining peg 200 passes from the top of the shelter 1 through a through channel (not shown in Figure 1) and extends out the bottom of the shelter to engage (e.g., penetrate) the soil or ground underneath the shelter.

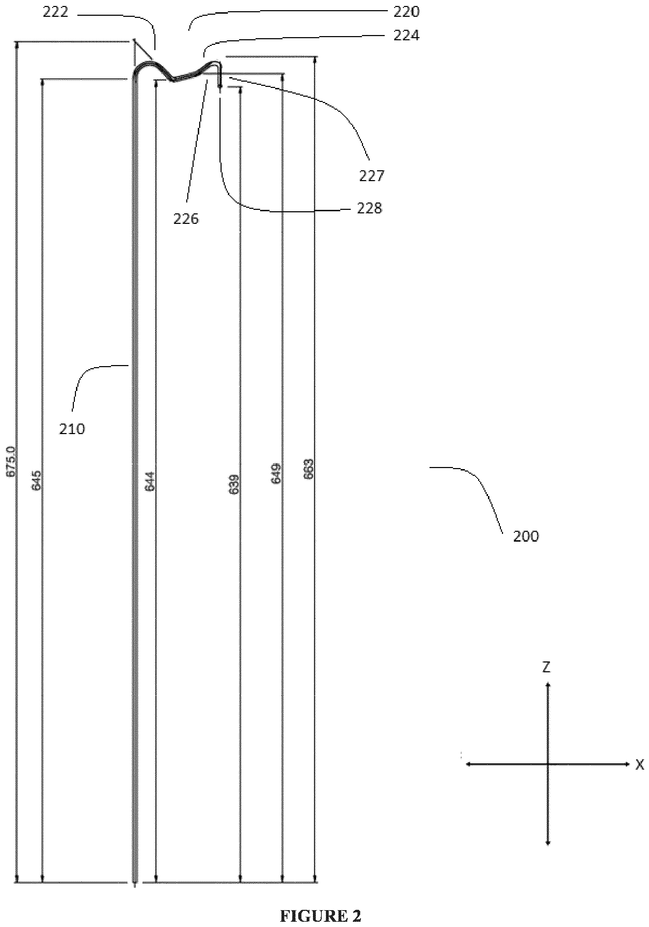

Retaining pegs according to certain embodiments of the invention may comprise a body portion configured to directly or indirectly secure a plant shelter to a section of soil positioned underneath and/or proximate to the plant shelter and a wire-attachment portion configured to engage a wire (e.g., trellis wire) located above and/or proximate to the plant shelter. The wire-attachment portion, in accordance with certain embodiments of the invention, may include a first end proximate to the body portion of the retaining peg and a second end distal to the body portion of the retaining peg, in which the wire-attachment portion includes a plurality of bent portions to define at least one hook portion spaced-apart from the body portion. Figure 2, for example, illustrates a front view of a retaining peg according to certain embodiments of the invention. As shown in Figure 2, the retaining peg 200 includes a body portion 210 and a wire-attachment portion 220, in which the wire-attachment portion includes a first end 222 proximate and/or adjacent to the body portion 210 and a second end 224 distal to the body portion 210. As illustrated by Figure 2, the second end 224 may comprise a hook portion 226 including a generally downward extending portion 227 having an endpoint 228. The view shown in Figure 2 represents example dimensions in the X-direction and the Z-direction, in which the Y-direction extends perpendicularly through the plane of the paper. Figure 2 includes relative dimensions of the various features of one example embodiment of the invention in millimeters. These dimensions are not limiting, but merely included to provide an example.

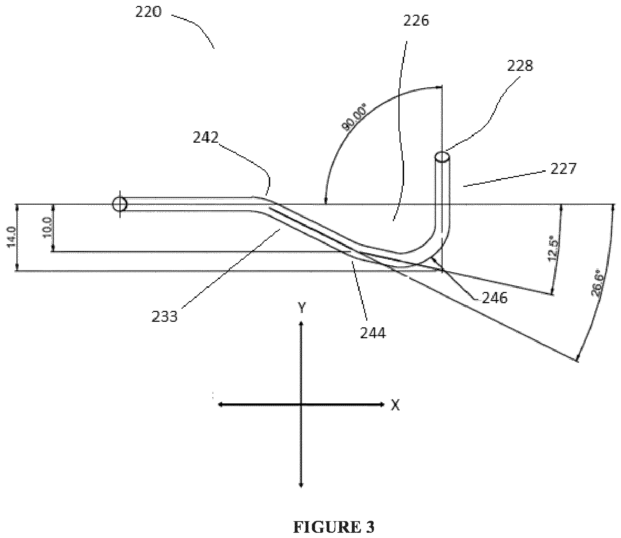

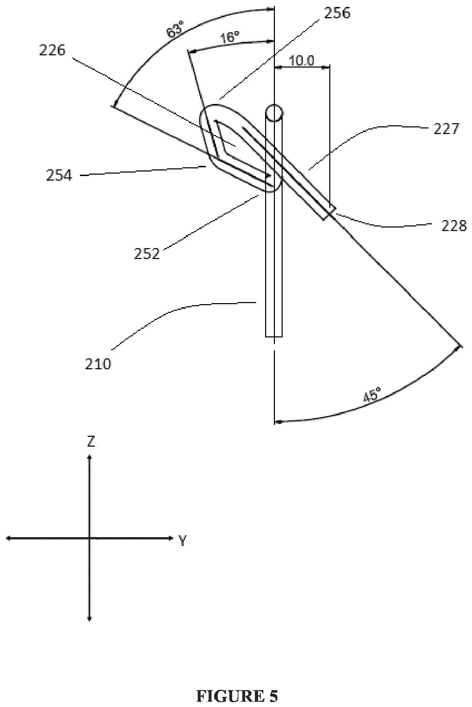

In accordance with certain embodiments of the invention, the body portion may substantially or completely lie in an imaginary Z-X plane (e.g., generally two-dimensional relative to the entirety of the retaining peg) and the at least one hook portion may, at least partially, lie in a different imaginary plane intersecting and passing through the imaginary Z-X plane including the body portion of the retaining peg. Figures 3 and 5, for instance, each illustrate that the hook portion 226 that includes the generally downward extending portion 227 lies in a different imaginary plane intersecting and passing through the imaginary Z-X plane including the body portion 210 of the retaining peg 200. In this regard, the body portion 210 generally does not include a component extending into the Y-direction as illustrated in both Figure 3 and Figure 5. Figure 3, for instance, illustrates a top view of a retaining peg in accordance with certain embodiments of the invention in which the Z-direction extends perpendicularly through the plane of the paper. Figure 5, for instance, illustrates a side view of a retaining peg in accordance with certain embodiments of the invention in which the X-direction extends perpendicularly through the plane of the paper. In this regard, the wire-attachment portion 220 includes components in each of the X-direction, Y-direction, and the Z-direction. Similar to Figure 2, Figures 3 and 5 each include relative dimensions of the various features of one example embodiment of the invention in millimeters. These dimensions are not limiting, but merely included to provide an example.

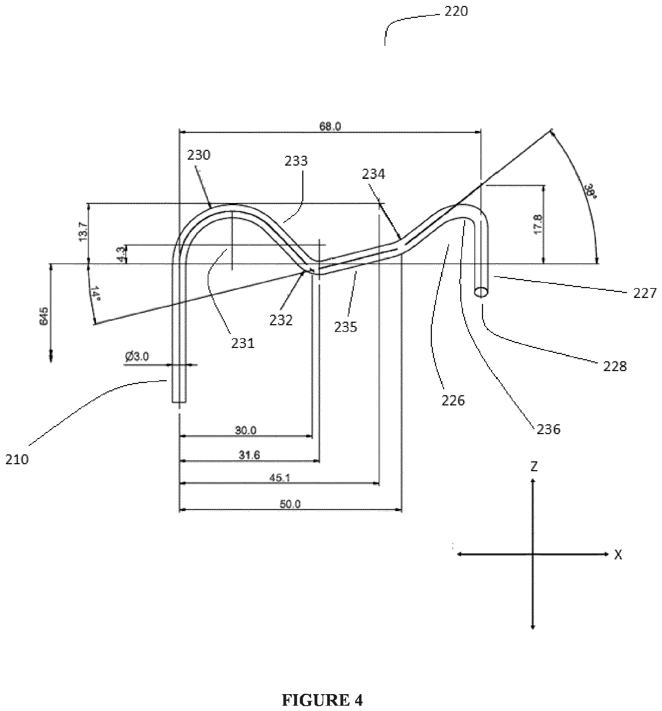

In accordance with certain embodiments of the invention, the wire-attachment portion includes at least one hook portion comprising a generally downward extending portion that includes a Z-X plane-component that may be spaced-apart and generally parallel to the body portion of the retaining peg. Figure 4, for example, illustrates an exploded front view of a wire-attachment portion 220 of a retaining peg according to an embodiment of the invention. In this regard, Figure 4 illustrates relative dimensions of the wire-attachment portion in the Z-direction and the X-direction, in which the Y-direction extends perpendicularly through the plane of the paper. As shown in Figure 4, the wire-attachment portion 220 includes at least one hook portion 226 comprising a generally downward extending portion 227 that includes a Z-X plane-component that may be spaced-apart and generally parallel to the body portion 210 of the retaining peg. In this regard, the hook portion 226 includes an endpoint 228 that may be located outside of the imaginary Z-X plane including the body portion 210 of the retaining peg 200 as best illustrated by Figure 3 and 5. In this regard, the wire-attachment portion comprises a three-dimensional structure while the body portion of the retaining peg comprises a generally two-dimension structure relative to the overall structure of the wire-retaining portion.

As noted above, Figures 2-5 include example (non-limiting) relative dimensions of the various structural features of one example embodiment of the invention in millimeters. These dimensions are not limiting, but merely included to provide an example. In accordance with certain embodiments of the invention, for example, the retaining peg may comprise a total height in a Z-direction (as illustrated in Figure 2) and the wire-attachment portion comprises a wire-attachment-height from about 1% to about 10% of the total height in the Z-direction, such as from about 1% to about 5%, or from about 1% to about 3%, or from about 1% to about 2% of the total height in the Z-direction. In accordance with certain embodiments of the invention, the wire-attachment portion may comprise a wire-attachment-height at most about any of the following: 10%, 9%, 8%, 7%, 6%, 5%, 4%, 3%, and 2% of the total height in the Z-direction of the retaining peg and/or at least about any of the following: 1%, 2%, 3%, 4%, and 5% of the total height in the Z-direction of the retaining peg.

In accordance with certain embodiments of the invention, the wire-attachment portion comprises a width in a X-direction comprising from about 5% to about 25% of the total height of the retaining peg in the Z-direction, such as about 5% to about 20%, or from about 5% to about 15%, or from about 8% to about 12%, or about 10% of the total height of the retaining peg in the Z-direction. In accordance with certain embodiments of the invention, for example, the width of the wire-attachment portion in the X-direction may comprise at most about any of the following: 35%, 30%, 25%, 20%, 15%, and 10% of the total height in the Z-direction of the retaining peg and/or at least about any of the following: 3%, 5%, 8%, 10%, 12%, and 15% of the total height in the Z-direction of the retaining peg.

In accordance with certain embodiments of the invention, the wire-attachment portion comprises a total depth in a Y-direction comprising from about 1% to about 20% of the total height of the retaining peg in the Z-direction, such as about 2% to about 15%, or from about 2% to about 10%, or from about 2% to about 5%, or from about 3% to about 5% of the total height of the retaining peg in the Z-direction. In accordance with certain embodiments of the invention, for example, the total depth in a Y-direction of the wire-attachment portion may comprise at most about any of the following: 25%, 20%, 15%, 10%, and 5% of the total height in the Z-direction of the retaining peg and/or at least about any of the following: 1%, 2%, 3%, 4%, 5%, and 10% of the total height in the Z-direction of the retaining peg.

In accordance with certain embodiments of the invention, the depth in the Y-direction of the wire-attachment portion may comprise a first depth portion extending out of the imaginary Z-X plane including the body portion and including the endpoint of the at least one hook portion, wherein the first depth portion may comprise from about 25% to about 60% of the total depth in the Y-direction, such as from about 30% to about 55%, or from about 35% to about 55%, or from about 40% to about 50%, or from about 40% to about 45% of the total depth in the Y-direction. In accordance with certain embodiments of the invention, for example, the first depth portion may comprise may at most about any of the following: 65%, 60%, 55%, 50%, 45%, 40%, and 35% of the total depth in the Y-direction and/or at least about any of the following: 20%, 25%, 30%, 35%, 40%, and 45% of the total depth in the Y-direction.

As illustrated in each of Figures 2-5, the wire-attachment portion comprises a plurality of bent portions imparting an overall three-dimensional structure. The wire-attachment portion, for example, may comprise a first plurality of bends in an imaginary Z-X plane (e.g., illustrated in Figures 2 and 4), a second plurality of bends in an imaginary Y-X plane (e.g., illustrated in Figure 3), and a third plurality of bends in an imaginary Z-Y plane (e.g., illustrated in Figure 5). As illustrated in Figure 4, the first plurality of bends in the imaginary Z-X plane comprise, at least, a first_{(*Z-X plane*)} bend 230, a second_{(*Z-X plane*)} bend 232, a third_{(*Z-X plane)*} bend 234, and a fourth_{(*Z-X plane*)} bend 236. As illustrated in Figure 3, the second plurality of bends in the imaginary Y-X plane comprise, at least, a first*_{(Y-X plane)}* bend 242, a second*_{(Y-X plane)}* bend 244, and a third*_{(Y-X plane)}* bend 246. As illustrated in Figure 5, the third plurality of bends in the imaginary Z-Y plane comprises, at least, a first*_{(Z-Y plane)}* bend 252, a second*_{(Z-Y plane)}* bend 254, and a third*_{(Z-Y plane)}* bend 256. Figure 3-5 each include relative dimensions representing the relative angles (in degrees) of each of the respective bends. In this regard, these values are provided merely as an example and are not limiting. For example, each of the bends 230, 232, 234, 236, 242, 244, 246, 252, 254, and 256 may independently of each other bend comprise a value that deviates at most about any of the following: 50%, 45%, 40%, 35%, 30%, 25%, 20%, and 10% from the respective value listed on the Figures and/or at least about any of the following: 1%, 2%, 3%, 5%, 8%, 10%, 15%, and 20% from the respective value listed on the Figures.

In accordance with certain embodiments of the invention, the first_{(*Z-X plane)*} bend 230 is located at a first position of the wire-attachment portion being proximate to the body portion of the retaining peg and each of the second_{(*Z-X plane)*} bend 232, first*_{(Y-X plane)}* bend 242, and the first*_{(Z-Y plane)}* bend 252 are located at a second position of the wire-attachment portion, in which the first position is located between the body portion of the retaining peg and the second position. The third*_{(Z-X plane)}* bend 234, the *second_{(Y-X plane)}* bend 244, and the second*_{(Z-Y plane)}* bend 254, in accordance with certain embodiments of the invention, are each located at a third position of the wire-attachment portion, in which the second position is located between the first position and the third position. The fourth_{(*Z-X plane)*} bend 236, the third*_{(Y-X plane)}* bend 246, and the third*_{(Z-Y plane)}* bend 256 are each located at a forth position of the wire-attachment portion, in which the third position is located between the second position and the fourth position.

The first*_{(Z-X plane)}* bend 230, in accordance with certain embodiments of the invention, may comprise a circular or semi-circular structure adjacent or proximate to the body portion 210 as illustrated in Figure 4. As shown on Figure 4, the circular or semi-circular structure may be varied by adjusting the radius from a centerpoint 231. In the particular embodiment illustrated in Figure 4, the radius from centerpoint 231 is 9.4 mm, As noted above, however, this value is merely an example and is not limiting. For instance, the first_{(*Z-X plane)*} bend 230 may be varied by adjusting the radius from the centerpoint 231 and comprise a value that deviates at most about any of the following: 50%, 45%, 40%, 35%, 30%, 25%, 20%, and 10% from the respective value listed on the Figure 4 and/or at least about any of the following: 1%, 2%, 3%, 5%, 8%, 10%, 15%, and 20% from the respective value listed on the Figure 4. In accordance with certain embodiments of the invention, the wire-attachment portion may comprise at least a first linear portion 233 positioned between the second position and the third position. The wire-attachment portion, in accordance with certain embodiments of the invention, may comprise a second linear portion 235 positioned between the fourth position and the endpoint 228 of the at least one hook portion 226.

In accordance with certain embodiments of the invention, the retaining peg comprises a wire or an injection molded structure. The retaining peg, for example, may be formed from a polymeric material; a ceramic material; or a metallic material, such as copper. Suitable polymeric materials, in accordance with certain embodiments of the invention, may comprise one or more polyolefins, such as polypropylene or polyethylene. For example, the polymeric material may comprise a blend of a polypropylene and a copolymer of polyethylene and polypropylene.

In another aspect, the present invention provides a kit comprising at least one retaining peg as described and disclosed herein and a shelter configured to receive and allow the retaining peg to pass through at least a portion of the shelter to directly or indirectly secure the shelter to a section of soil positioned underneath the shelter. In accordance with certain embodiments of the invention, the shelter (e.g., plant shelter) may comprise at least one through channel extending through a shelter-length of the shelter from a first-shelter-end to a second-shelter-end. The at least one through channel may be configured to receive and allow the retaining peg to pass through the at least one through channel. In accordance with certain embodiments of the invention, the shelter (e.g., plant shelter) may additionally or alternatively comprise a collapsible shelter. In this regard, the collapsible shelter may be configured to
transition between a collapsed configuration (e.g., generally flat) and an uncollapsed configuration (e.g., expanded into a three-dimensional tubular structure defining a conduit therethrough) upon application of pressure by a user. In accordance with certain embodiments of the invention, the shelter may comprise a twin-walled wrap-type shelter that may be laid flat upon pressure and upon removal of pressure the wrap-type shelter rolls upon itself to define tubular structure that can surround a plant to be protected. Such shelters while wrapped upon itself may be described as being vertically split to allow the diameter of the tubular structure to expand, such as upon growth of the plant.

In accordance with certain embodiments of the invention, the shelter may comprise an outer longitudinal tubular structure having an outer wall, a first-outer-longitudinal-tubular-structure end, and a second-outer-longitudinal-tubular-structure end diametrically opposed to the first-outer-longitudinal-tubular-structure end. The shelter may further comprise an inner longitudinal tubular structure positioned within the first longitudinal tubular structure and having an inner wall, a first-inner-longitudinal-tubular-structure end, and a second-inner-longitudinal-tubular-structure end diametrically opposed to the first-inner-longitudinal-tubular-structure end. In accordance with certain embodiments of the invention, the shelter may comprise a segmented annular portion positioned between the outer wall and the inner wall, in which the segmented annular portion comprises a plurality of segmented annular divider walls defining a plurality of through channels extending from the first-outer-longitudinal-tubular-structure end to the second-outer-longitudinal-tubular-structure end. At least one of the segmented annular divider walls, in accordance with certain embodiments of the invention, may extend either directly or indirectly from an outer surface of the inner longitudinal tubular structure towards and connect either directly or indirectly with an inner surface of the outer longitudinal tubular structure. In this regard, the outer and inner longitudinal tubular structures may, according to certain embodiments of the invention, be joined together via at least one of the segmented divider walls either as a unitary structure (e.g., formed as one single piece and being devoid of any attachment articles such as screws, bolts, clips or the like) or as an assembled structure, in which the individual components (e.g., the outer and inner longitudinal tubular structures and the segmented annular divider walls) may be releasable engaged, such as by screws, bolts, clips and the like, with each other to form an assembled shelter. In accordance with certain embodiments of the invention, for example, one or more through channels may be defined by an inner surface of the outer longitudinal tubular structure, an outer surface of the inner longitudinal tubular structure, and one or more segmented annular divider walls. According to certain embodiments of the invention, for instance, the plurality of segmented annular divider walls may extend the full length of the shelter from the outer longitudinal tubular structure first end to the outer longitudinal tubular structure second end. However, in other embodiments of the invention, for example, the plurality of segmented annular divider walls may only extend along a portion of the shelter beginning at the outer longitudinal tubular first end.

In accordance with certain embodiments of the invention, for instance, the plurality of segmented annular divider walls may comprise a unitary top plate formed as part of the shelter (e.g., the top plate(s) may be formed as an integral portion of the shelter without the need for separate attachment means to the longitudinal tubular structures) and positioned so as to lay flush with the outer and/or inner longitudinal tubular structure first end and/or second end. The unitary top plate may comprise a plurality of apertures extending through the top plate and to the opposite end of the shelter to define through channels for receiving retaining structure(s). In this regard, the plurality of apertures may align with apertures located at the opposite end of the shelter. In other embodiments, however, the unitary top plate may include a plurality of apertures, while the opposite end of the shelter may be open to the ground such that the plurality of apertures may receive retaining structure(s) that may be inserted into the ground without aligning with a second set of apertures.

In accordance with certain embodiments of the invention, the plurality of segmented annular divider walls may comprise one or more cap-portions that extend and/or connect the outer and inner longitudinal tubular structures together, in which the cap-portion or cap-portions may include apertures in a top-facing surface extending through a thickness of the cap-portion(s) to a bottom-facing surface to define through channels for receiving retaining pegs. In this regard, the one or more cap-portions need not extend significantly (if at all) into the longitudinal direction of the annulus defined between the outer and inner longitudinal tubular structures. In certain embodiments of the invention, for example, the cap-portion(s) may be positioned at either or both the first end and second end of the shelter. In certain embodiments of the invention, apertures located in an upper cap-portion (e.g., located at or proximate the first end of the shelter) may be aligned with apertures located in a lower cap-portion (e.g., located at or proximate the second end of the shelter). In accordance, with certain embodiments of the invention, the cap-portions(s) may be releasably engaged with the respective ends of the shelter, such as by engaging the outer and inner longitudinal tubular structures and snapping into place at one or both ends of the shelter.

According to certain embodiments of the invention, for instance, the shelter may comprise from about 1 to about 50 segmented annular divider walls. In other embodiments of the invention, for example, the shelter may comprise from about 3 to about 30 segmented annular divider walls. In further embodiments of the invention, for instance, the shelter may comprise from about 5 to about 10 segmented annular divider walls. As such, in certain embodiments of the invention, the shelter may comprise a number of segmented annular divider walls from at least about any of the following: 1, 2, 3, 4, 5 segmented annular divider walls and/or at most about 50, 40, 30, 25, 20, 15, and 10 segmented annular divider walls (e.g., about 3-15 segmented annular divider walls, about 5-10 segmented annular divider walls, etc.).

In some embodiments of the invention, for instance, the outer and/or inner longitudinal tubular structure second end may be configured to be inserted below ground level. For instance, the second end of the outer and/or inner longitudinal tubular structure may comprise a blade or blade-like end or a generally narrower thickness to facilitate insertion into the below ground level. In accordance with certain embodiments of the invention, for example, the outer and/or inner longitudinal tubular structure second end may also extend above the ground or flush with the ground. In this regard, the portion of the outer longitudinal tubular structure that extends just above ground level may be protected from degradation.

In certain embodiments of the invention, for example, the inner longitudinal tubular structure may be configured to receive a plant (or a portion of a plant) therein. In this regard, for instance, both the inner longitudinal tubular structure and the outer longitudinal tubular structure may be configured to fit over and/or encircle the plant or portion of the plant (e.g., trunk of a tree or bush, vine, etc.). As such, the longitudinal tubular structure may be manufactured in a variety of sizes (both length and diameter) to accommodate many different sizes of trees, shrubs, or vines.

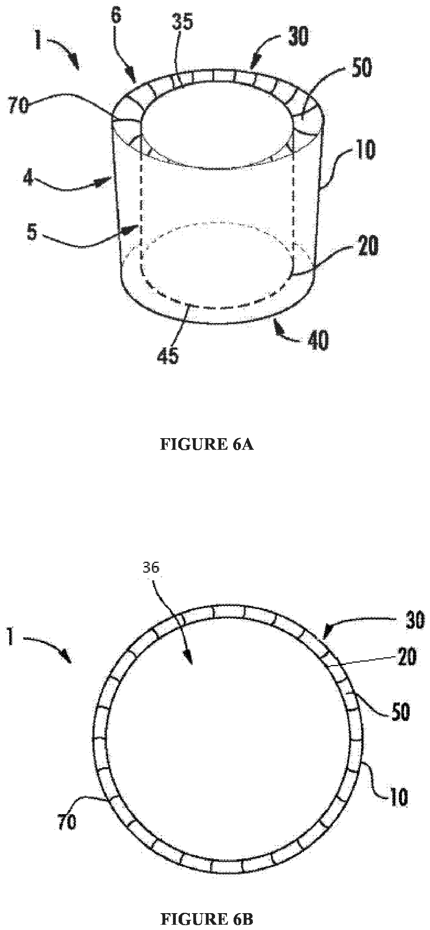

For example, Figure 6A is an isometric view of a shelter that may be included in a kit according to an embodiment of the invention, and Figure 6B is a top view of the shelter of Figure 6A according to an embodiment of the invention. As shown in Figures 6A and 6B, the shelter 1 includes an outer longitudinal tubular structure 4 having an outer wall 10, a first end 30, and a second end 40 diametrically opposed to the first end 30; an inner longitudinal tubular structure 5 positioned within the outer longitudinal tubular structure 4 and having an inner wall 20, a first end 35, and a second end 45 diametrically opposed to the first end 35; and a segmented annular portion 6 positioned between the outer longitudinal tubular structure 4 and the inner longitudinal tubular structure 5 . As shown in Figures 6A and 6B, the segmented annular portion 6 may comprise a plurality of segmented annular divider walls 70, at least partially, defining a plurality of through channels 50 extending from the outer longitudinal tubular structure first end 30 to the outer longitudinal tubular structure second end 40. In this regard, the plurality of segmented annular divider walls 70 may divide the annulus defined by the outer longitudinal tubular structure 4 and the inner longitudinal tubular structure 5 into a plurality of through channels 50.

In accordance with certain embodiments of the invention, for instance, the plurality of through channels 50 may be configured to receive at least one retaining peg, such as those described and disclosed herein. For example, at least one or each of the plurality of through channels 50 may be configured (e.g., sized) to receive or accommodate at least one retaining peg. According to certain embodiments of the invention, for example, the shelter may further comprise at least one retaining peg for providing structural support to the shelter when inserted through any one or more of the plurality of through channels 50. Figure 6B illustrates a top view of the shelter of Figure 6A according to an embodiment of the invention. As shown in Figure 6B, the shelter 1 includes a conduit 36 extending through the entire length of the shelter to allow a plant to extend therethrough. As shown in Figures 6A and 6B, a retaining peg may be inserted into any one of the plurality of through channels 50 defined, at least partially, by the plurality of segmented annular divider walls 70.

In accordance with certain embodiments of the invention, at least one of the outer longitudinal tubular structure, the inner longitudinal tubular structure, the plurality of segmented annular divider walls, or any combination thereof comprises at least one of a synthetic polymer, a biodegradable polymer, a biocomposite, or any combination thereof.

As noted above, the shelter may additionally or alternatively comprise a collapsible shelter configured to transition between a collapsed configuration and an uncollapsed configuration upon application of pressure by a user. In accordance with certain embodiments of the invention, for example, the shelter may comprise a collapsible shelter including a first compression portion extending longitudinally from the first-shelter-end to the second-shelter-end and a second compression portion diametrically opposed to the first compression portion and extending longitudinally from the first-shelter-end to the second-shelter-end. The shelter may further comprise a first side of the collapsible shelter defined by the first compression portion, the second compression portion, the first-shelter-end, and the second-shelter-end. The shelter may further comprise a second side of the collapsible shelter opposed to the first side, in which the first compression portion and the second compression portion are configured to flexibly pivot from an uncollapsed configuration and to allow a first side of the collapsible shelter to become substantially parallel to the second side of the collapsible shelter to form a collapsed configuration.

In accordance with certain embodiments of the invention, at least one of the first compression portion and the second compression portion may comprise a region of increased stretchabilty relative to the rest of the collapsible shelter. In this regard, the localized increase in stretchability and/or flexibility facilitates the ability of these portions to flexibly pivot to provide a collapsible structure. In accordance with certain embodiments of the invention, at least one of the first compression portion and the second compression portion comprises a crease extending from the first-shelter-end to the second-shelter-end. In accordance with certain embodiments of the invention, at least one of the first compression portion and the second compression portion comprises a fluted structure, a dimpled structure, or a hinged structure extending from the first-shelter-end to the second-shelter-end.

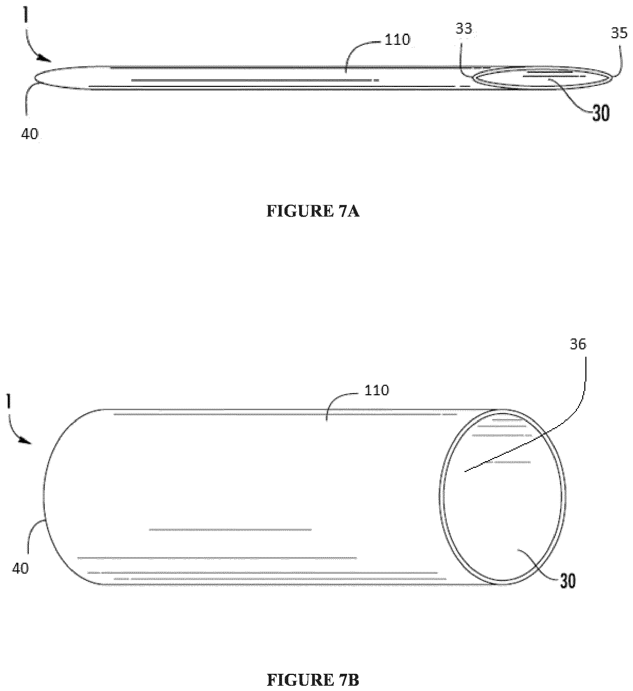

Figure 7A, for example, illustrates an isometric view of a collapsed shelter 1 according to an embodiment of the invention. The shelter 1 illustrated in Figure 7A is defined by a longitudinal structure 110 having a first end 30 and a diametrically opposed second end 40. Figure 7A shows a first longitudinal compression portion 33 and a second longitudinal compression portion 35, both running substantially continuously along the longitudinal direction of the longitudinal structure 110 from the first end 30 to the second end 40. The shelter 1 illustrated in Figure 7A is configured to collapse at the first longitudinal compression portion 33 and the second longitudinal portion 35. For example, the materials of construction of the shelter 1, the amount of material extruded within the vicinity of the first longitudinal compression portion 33 and the second longitudinal compression portion 35, and/or the grain direction of the material of the longitudinal structure 110 may be such that the shelter 1 collapses at the first longitudinal compression portion 33 and the second longitudinal compression portion 35 to form a collapsed shelter 1 illustrated in Figure 7A. Stated somewhat differently, the first longitudinal compression portion 33 and the second longitudinal compression portion 35 may each be configured to flexibly pivot allowing one side (e.g., a first side) of the longitudinal structure 110 defined by the first longitudinal compression portion 33, the second longitudinal compression portion 35, the first end 30 and the second end 40 to become substantially parallel to an opposite side (e.g., a second side) opposed to the one side (e.g., the first side) of the longitudinal structure 110.

Figure 7B is an isometric view of the shelter of Figure 7A in an expanded, uncollapsed configuration according to an embodiment of the invention. The shelter 1 of Figure 7B is substantially cylindrical in form. As shown in Figure 7B, the first longitudinal compression portion 33 and the second longitudinal compression portion 35 shown in Figure 7A substantially disappear when the shelter 1 is in its uncollapsed state. In certain embodiments of the invention, the first longitudinal compression portion 33 and the second longitudinal compression portion 35 may be defined by a stretchable region that allows the first longitudinal compression portion 35 and the second longitudinal compression portion 35 to flexibly pivot radially along their axis. In this regard, the stretchable region(s) may comprise a latent ability to stretch greater than remainder of the shelter.

The longitudinal tubular structure shown in Figure 7A and 7B is configured to lie substantially flat upon application of an axial force being applied to the longitudinal tubular structure, otherwise referred to as an uncollapsed and/or uncrimped form. An opposite force applied to both sides of the tubular circular will cause the tubular structure to curl or axially open to form the tubular body of the longitudinal tubular structure. In accordance with certain embodiments of the invention, each end of the longitudinal tubular structure 30, 40 will allow the longitudinal tubular structure to be compressed into the collapsed or crimped state.

In an embodiment of the invention, at least one of the first longitudinal compression portion 33 and the second longitudinal compression portion 35 is opened (e.g., cut or split to form a wrap) and configured to overlap over part of the body of the longitudinal structure 110 in the uncollapsed or uncrimped state. Without intending to be bound by theory, the overlapped portion along the body of the longitudinal structure 110 provides structural support along the longitudinal direction of the shelter 1. In certain embodiments of the invention, one or more circumferential strengthening portions substantially surrounding the longitudinal tubular structure either along the inside of the longitudinal tubular structure or along the outside of the longitudinal structure may be included to provide stability to the structure in the uncollapsed or uncrimped state.

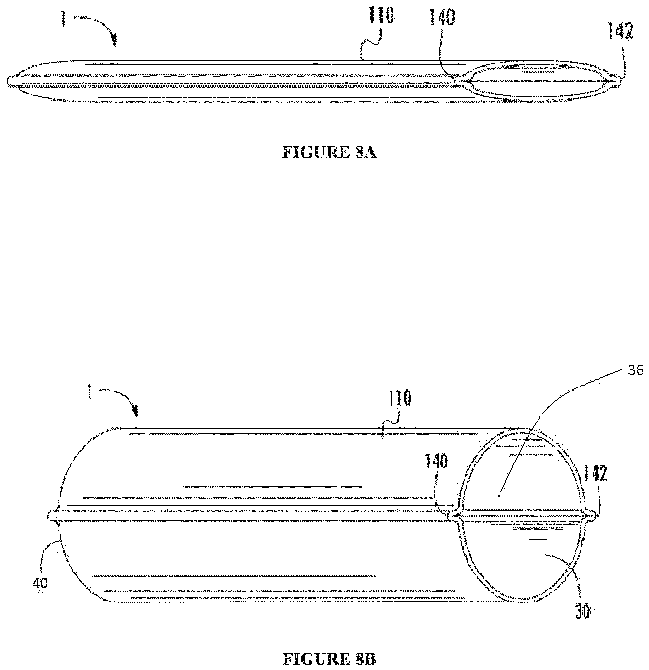

Figure 8A illustrates an isometric view of a collapsed shelter according to another embodiment of the invention. Figure 8B is an isometric view of the shelter of Figure 8A in an expanded, uncollapsed configuration. The shelter 1 of Figure 8A, in a collapsed form, comprises a longitudinal tubular structure 110 having a first end 30 and a diametrically opposed second end 40. While the shelter 101 of Figures 8A and 8B may be configured to comprises a first longitudinal compression line 140 and a second longitudinal compression line 142 diametrically opposed to the first longitudinal compression line 140. The first longitudinal compression line 140 and the second longitudinal compression line 142 are substantially continuous along the longitudinal tubular structure 110 extending from first end 30 to second end 40.

In accordance with certain embodiments of the invention, the first longitudinal compression line 140 and the second longitudinal compression line 142 may be configured to flexibly pivot allowing a first side of the longitudinal tubular structure 110 defined by (i) the first longitudinal compression line 140, (ii) the second longitudinal compression line 142, (iii) the first end 30, and (iii) the second end 40 to become substantially parallel with a second side of the longitudinal tubular structure 110 that is opposed to the first side.

According to an embodiment of the invention, the first longitudinal compression line 140 and the second longitudinal compression line 142 may each be defined by a crease that runs along the longitudinal tubular structure 110. According to another embodiment of the invention, the first longitudinal compression line 140 and the second longitudinal compression line 142 may be fluted lines within the body of the longitudinal tubular structure 110. According to yet another embodiment of the invention, dimpled structures may extend along the first longitudinal compression line 140 and the second longitudinal compression line 142 in the body of the longitudinal tubular structure 110.

In yet other embodiments of the invention, the first longitudinal compression line 140 and the second longitudinal compression line 142 may be a hinged structure capable of being flexed and unflexed to allow the shelter 1 to become collapsed and uncollapsed. The hinged structures define the first longitudinal compression line 140 and the second longitudinal compression line 142 in the example embodiments of Figures 8A and 8B. The shelter 1 may additionally be configured to further collapse where the sides defined between first longitudinal compression line 140 and the second longitudinal compression line 142 become more substantially aligned.

In yet other embodiments of the invention, the first longitudinal compression line 140 and the second longitudinal compression line 142 may be a combination of any of the structures defined herein-i.e., any combination defined by a crease, flutes, dimples, hinge or any other structure capable of becoming flexibly pivoted contemplated by a person of ordinary skill in the art having the benefit of this disclosure to allow the longitudinal tubular structure to be compressed into the collapsed or crimped state.

In accordance with certain embodiments of the invention, the shelter may comprise a synthetic polymer. For example, the synthetic polymer may comprise at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof.

In accordance with certain embodiments of the invention, the shelter may comprise a biodegradable polymer. For example, the biodegradable polymer may comprise at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof.

In accordance with certain embodiments of the invention, the shelter may further comprise at least one of an ultraviolet stabilizer, a waterproofing additive, an extending filler, a prodegradant agent, a reinforcing filler, an animal repellent, a fungal repellent, a bacterial repellent, a pigment, or any combination thereof. In accordance with certain embodiments of the invention, the shelter may comprise a pigment to provide, for example, a white or green appearance. In certain applications, for example, it may be desired to provide a white shelter to negate the traditional approach of painting tree trunks to guard them against sunlight, which can damage bark, particularly in young trees. Such white shelters, for example, may beneficially be provided in a wrap-type shelter discussed above that will expand in diameter with growth of the trunk without surface cracking realized with the traditional approach of painting a tree trunk white.

In certain alternative embodiments, the shelter (e.g., an outer longitudinal tubular structure and/or the inner longitudinal tubular structure) may comprises a mesh. Such shelters may be more suitable for applications in which exposure of the plant to sunlight is particularly desired.

### III. Method of Protecting a Plant

In yet another aspect, a method of protecting a plant (e.g., vine) is provided. In accordance with certain embodiments of the invention, the method of protecting a plant includes surrounding the plant or a portion of the plant with a shelter. In accordance with certain embodiments of the invention, the shelter may be configured to receive and allow a retaining peg, such as a retaining peg described and disclosed herein) to pass through at least a portion of the shelter to directly or indirectly secure the shelter to a section of soil positioned underneath the shelter. In this regard, the shelter may comprise at least one through channel extending at least partially through a shelter-length of the shelter from a first-shelter-end to a second-shelter-end. The methods may further comprise a step of inserting a retaining peg as disclosed herein through at least one through channel of the shelter. In accordance with certain embodiments of the invention, the method may further comprise a step of engaging a wire (e.g., a trellis wire) with the wire-attachment portion of the retaining peg. As previously noted, the retaining pegs as disclosed herein negate the need for using a separate twist or tie to attach the shelter to a proximately located wire (e.g., trellis wire). In this regard, the kits and methods in accordance with certain embodiments of the invention may be devoid of twists or ties, such as those traditionally employed to anchor a shelter to a nearby wire.

These and other modifications and variations to the invention may be practiced by those of ordinary skill in the art without departing from the spirit and scope of the invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the spirit and scope of the appended claims should not be limited to the exemplary description of the versions contained herein.

## Claims

1. A retaining peg, comprising:
(i) a body portion configured to directly or indirectly secure a plant shelter to a section of soil positioned underneath the shelter; and
(ii) a wire-attachment portion configured to engage a wire, the wire-attachment portion includes a first end proximate to the body portion and a second end distal to the body portion, wherein the wire-attachment portion includes a plurality of bent portions to define at least one hook portion spaced-apart from the body portion.

2. The retaining peg of claim 1, wherein the body portion lies in an imaginary Z-X plane and the at least one hook portion lies in a different imaginary plane intersecting and passing through the imaginary Z-X plane, and optionally wherein:
(a) the at least one hook portion comprises a generally downward extending portion, the downward extending portion includes a Z-X plane-component that is spaced-apart and generally parallel to the body portion; and/or
(b) the at least one hook portion includes an endpoint, the endpoint being located outside of the imaginary Z-X plane.

3. The retaining peg of claims 1 or 2, wherein the retaining peg comprises a total height in a Z-direction and the wire-attachment portion comprises from about 1% to about 10% of the total height in the Z-direction, such as from about 1% to about 5%, or from about 1% to about 3%, or from about 1% to about 2% of the total height in the Z-direction.

4. The retaining peg of claims 1-3, wherein the wire-attachment portion comprises:
(a) a width in a X-direction comprising from about 5% to about 25% of the total height of the retaining peg in the Z-direction, such as about 5% to about 20%, or from about 5% to about 15%, or from about 8% to about 12%, or about 10% of the total height of the retaining peg in the Z-direction; and/or
(b) a total depth in a Y-direction comprising from about 1% to about 20% of the total height of the retaining peg in the Z-direction, such as about 2% to about 15%, or from about 2% to about 10%, or from about 2% to about 5%, or from about 3% to about 5% of the total height of the retaining peg in the Z-direction and optionally wherein the depth in the Y-direction of the wire-attachment portion comprises: a first depth portion extending out of the imaginary Z-X plane and including the endpoint of the at least one hook portion, wherein the first depth portion comprises from about 25% to about 60% of the total depth in the Y-direction, such as from about 30% to about 55%, or from about 35% to about 55%, or from about 40% to about 50%, or from about 40% to about 45% of the total depth in the Y-direction.

5. The retaining peg of claims 1-4, wherein the plurality of bent portions comprise a first plurality of bends in an imaginary Z-X plane, a second plurality of bends in an imaginary Y-X plane, and a third plurality of bends in an imaginary Z-Y plane and optionally wherein:

6. The retaining peg of claim 5, wherein:
(a) the first plurality of bends in the imaginary Z-X plane comprise a first_{(*Z-Xplane)*} bend, a second_{(*Z-X plane)*} bend, a third_{(*Z-X plane)*} bend, and a fourth_{(*Z-X plane)*} bend; and/or
(b) the second plurality of bends in the imaginary Y-X plane comprise a first_{(*Y-X plane)*} bend, a second*_{(Y-X plane)}* bend, and a third*_{(Y-X plane)}* bend; and/or
(c) the third plurality of bends in the imaginary Z-Y plane comprises a first*_{(Z-Y plane)}* bend, a second*_{(Z-Y plane)}* bend, and a third*_{(Z-Y plane)}* bend, and optionally wherein (i) the first_{(*Z-X plane)*} bend is located at a first position of the wire-attachment portion being proximate to the body portion and (ii) the second_{(*Z-X plane)*} bend, first*_{(Y-X plane)}* bend, and the first*_{(Z-Y plane)}* bend are each located at a second position of the wire-attachment portion; wherein the first position is located between the body portion and the second position, and further optionally wherein: the third_{(Z*-X plane)*} bend, the *second_{(Y-X plane)}* bend, and the *second*_{*(*Z*-Y plane)*} bend are each located at a third position of the wire-attachment portion; wherein the second position is located between the first position and the third position, and even further optionally wherein: the fourth_{(*Z-X plane)*} bend, the third*_{(Y-X plane)}*, the third_{*(*Z*-Y plane)*} bend are each located at a forth position of the wire-attachment portion; wherein the third position is located between the second position and the fourth position.

7. The retaining peg of claim 6, wherein:
(a) the first_{(*Z-X plane)*} bend comprises a circular or semi-circular structure adjacent or proximate to the body portion; and/or
(b) the wire-attachment portion includes a first linear portion positioned between the second position and the third position; and/or
(c) the wire-attachment portion includes a second linear portion positioned between the fourth position and the endpoint of the at least one hook portion.

8. The retaining peg of claims 1-7, wherein the retaining peg comprises:
a wire and/or a polymeric material, a ceramic material, or a metallic material, such as copper.

9. A kit, comprising:
(i) a retaining peg according to any one of claims 1-8; and
(ii) a shelter configured to receive and allow the retaining peg to pass through at least a portion of the shelter to directly or indirectly secure the shelter to a section of soil positioned underneath the shelter.

10. The kit of claim 9, wherein the shelter comprises:
(a) at least one through channel extending through a shelter-length of the shelter from a first-shelter-end to a second-shelter-end; wherein the at least one through channel is configured to receive and allow the retaining peg to pass through the at least one through channel; and/or
(b) (i) an outer longitudinal tubular structure having an outer wall, a first-outer-longitudinal-tubular-structure end, and a second-outer-longitudinal-tubular-structure end diametrically opposed to the first-outer-longitudinal-tubular-structure end; (ii) an inner longitudinal tubular structure positioned within the first longitudinal tubular structure and having an inner wall, a first-inner-longitudinal-tubular-structure end, and a second-inner-longitudinal-tubular-structure end diametrically opposed to the first-inner-longitudinal-tubular-structure end; and (iii) a segmented annular portion positioned between the outer wall and the inner wall, wherein the segmented annular portion comprises a plurality of segmented annular divider walls defining a plurality of through channels extending from the first-outer-longitudinal-tubular-structure end to the second-outer-longitudinal-tubular-structure end, and optionally wherein: at least one of the outer longitudinal tubular structure, the inner longitudinal tubular structure, the plurality of segmented annular divider walls, or any combination thereof comprises at least one of a synthetic polymer, a biodegradable polymer, a biocomposite, or any combination thereof.

11. The kit of claim 10, wherein:
(a) the synthetic polymer comprises at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof; and/or
(b) the biodegradable polymer comprises at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof.

12. The kit of claims 9-11, wherein:
(a) the kit further comprises at least one of an ultraviolet stabilizer, a waterproofing additive, an extending filler, a prodegradant agent, a reinforcing filler, an animal repellent, a fungal repellent, a bacterial repellent, a pigment, or any combination thereof; and/or
(b) the outer longitudinal tubular structure and/or the inner longitudinal tubular structure comprises a mesh.

13. The kit of claims 9-12, wherein the shelter comprises:
(a) a collapsible shelter configured to transition between a collapsed configuration and an uncollapsed configuration upon application of pressure by a user; and/or
(b) a collapsible shelter including (i) a first compression portion extending longitudinally from the first-shelter-end to the second-shelter-end, and (ii) a second compression portion diametrically opposed to the first compression portion and extending longitudinally from the first-shelter-end to the second-shelter-end; (iii) a first side of the collapsible shelter defined by the first compression portion, the second compression portion, the first-shelter-end, and the second-shelter-end; and (iv) a second side of the collapsible shelter opposed to the first side; wherein the first compression portion and the second compression portion are configured to flexibly pivot from an uncollapsed configuration and to allow a first side of the collapsible shelter to become substantially parallel to the second side of the collapsible shelter to form a collapsed configuration.

14. The kit of claim 13, wherein the at least one of the first compression portion and the second compression portion comprises:
(a) a region of increased stretchabilty relative to the rest of the collapsible shelter;
(b) a crease extending from the first-shelter-end to the second-shelter-end; or
(c) a fluted structure, a dimpled structure, or a hinged structure extending from the first-shelter-end to the second-shelter-end.

15. A method of protecting a plant, comprising:
(i) surrounding the plant or a portion of the plant with a shelter, said shelter configured to receive and allow a retaining peg to pass through at least a portion of the shelter to directly or indirectly secure the shelter to a section of soil positioned underneath the shelter, wherein the shelter comprises at least one through channel extending through a shelter-length of the shelter from a first-shelter-end to a second-shelter-end; and
(ii) inserting a retaining peg according to any one of claims 1-8 through at least one of the at least one through channel;
and optionally wherein the method further comprises engaging an overhead wire with the wire-attachment portion of the retaining peg.
